(19) Europäisches Patentamt
European Patent Office
Office européen des brevets

(11) EP 4 206 242 A1

(12) EUROPEAN PATENT APPLICATION
published in accordance with Art. 153(4) EPC

(43) Date of publication:
**05.07.2023 Bulletin 2023/27**

(21) Application number: **21861022.8**

(22) Date of filing: **14.07.2021**

(51) International Patent Classification (IPC):
***C08F 214/22*** (2006.01) ***C08L 27/16*** (2006.01)
***C09D 127/16*** (2006.01) ***H01M 4/13*** (2010.01)
***C08K 3/013*** (2018.01) ***H01M 50/426*** (2021.01)

(52) Cooperative Patent Classification (CPC):
**C08F 214/22; C08K 3/013; C08L 27/16; C09D 127/16; H01M 4/13; H01M 50/426;**
Y02E 60/10; Y02P 70/50

(86) International application number:
**PCT/JP2021/026412**

(87) International publication number:
**WO 2022/044593 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.08.2020 JP 2020144555**

(71) Applicant: **Kureha Corporation**
**Chuo-ku**
**Tokyo 103-8552 (JP)**

(72) Inventors:
- **SUZUKI, Yumeno**
**Tokyo 103-8552 (JP)**
- **WATANABE, Keisuke**
**Tokyo 103-8552 (JP)**
- **KATONO, Masataka**
**Tokyo 103-8552 (JP)**

(74) Representative: **Zimmermann & Partner Patentanwälte mbB**
**Postfach 330 920**
**80069 München (DE)**

# (54) RESIN COMPOSITION, COATING COMPOSITION COMPRISING SAME, ELECTRODE FOR STACKING, SEPARATOR FOR STACKING, AND NONAQUEOUS-ELECTROLYTE SECONDARY BATTERY AND PRODUCTION METHOD THEREFOR

(57) An object is to provide a resin composition excellent in dry adhesion to both a positive electrode and a negative electrode. Provided is a resin composition to solve the above issue, which contains a vinylidene fluoride copolymer containing: 73.7 mass% or more and 96.9 mass% or less of a constituent unit derived from vinylidene fluoride; 0.1 mass% or more and 1.3 mass% or less of a constituent unit containing a carboxy group; and 3 mass% or more and 25 mass% or less of an other constituent unit which does not contain a carboxy group and is derived from a compound copolymerizable with vinylidene fluoride, with the proviso that a total amount of the constituent units constituting the vinylidene fluoride is taken as 100 mass%. A solution obtained by dissolving 4 g of the vinylidene fluoride copolymer in 1 L of N,N-dimethylformamide has an intrinsic viscosity at 30°C of 0.5 dL/g or more and 3 dL/g or less.

EP 4 206 242 A1

## Description

### TECHNICAL FIELD

The present invention relates to a resin composition, a coating composition containing same, an electrode for stacking, a separator for stacking, and a nonaqueous-electrolyte secondary battery and a producing method therefor.

### BACKGROUND ART

In recent years, a nonaqueous-electrolyte secondary battery (hereinafter, also simply referred to as "secondary battery") has been used in various applications, and there is a demand for higher capacity. In the related art, many wound secondary batteries have been developed in which an electrode and a separator are wound (in the present specification, a positive electrode and a negative electrode may be collectively referred to as an "electrode" when there is no need to particularly distinguish them). However, in recent years, in order to increase the capacity of a secondary battery, a stacked secondary battery in which an electrode and a separator are stacked has been attracting attention. Also, safety is becoming more and more important as these secondary batteries are used in various applications.

Here, in the stacked secondary battery, the electrode and the separator shift more easily than in the wound secondary battery. For example, in the production of secondary batteries, when a laminate of electrodes and separators is transported or packed into the exterior body, the electrodes and the separators may shift from desired positions or wrinkle. In addition, even in the case of a wound secondary battery, the wound electrode/separator laminate may loosen over time after winding, and may shift during transportation or insertion into the exterior body. Furthermore, in a secondary battery using a pouch-type exterior body, when force is applied from the outside during the use of the secondary battery, the positions of the electrode and the separator may shift. In the secondary battery, the occurrence of such shifting or wrinkles not only causes a yield loss, but also makes it difficult to obtain the desired performance in terms of battery performance or safety.

Therefore, a method has been proposed in which a porous adhesive layer is formed on one side or both sides of a separator, and a battery and the separator adhere to each other (Patent Document 1). The porous adhesive layer contains a vinylidene fluoride copolymer having a constituent unit derived from vinylidene fluoride, a constituent unit derived from hexafluoropropylene, and a constituent unit derived from a carboxy group-containing monomer.

In order to increase the adhesion between the separator and the electrode, it has also been proposed to form a layer by applying a composition containing a vinylidene fluoride copolymer having a constituent unit derived from vinylidene fluoride and a constituent unit derived from a specific carboxy group-containing monomer onto the separator (Patent Document 2).

### CITATION LIST

Patent Literature

Patent Document 1: JP 2017-117788 A
Patent Document 2: WO 2014/002937


### SUMMARY OF INVENTION

Technical Problem

Here, when the adhesive layer as disclosed in Patent Document 1 or Patent Document 2 is formed on the surface of the separator, there is a case where the adhesive layer and the electrode adhere to each other before injection of an electrolyte solution (hereinafter, also referred to as "dry adhesion"), and also a case where the adhesive layer and the electrode adhere to each other after injection of the electrolyte solution (hereinafter, also referred to as "wet adhesion"). Then, in case of adhesion (dry adhesion) before the injection of the electrolyte solution, the resin in the resin-containing layer softens and bites into the electrode layer, adhering the separator and the electrode to each other. Meanwhile, in case of wet adhesion, the resin swollen by the electrolyte solution is melted at the time of hot-pressing, enters the electrode layer, and is gelled by cooling. As a result, the resin is brought into close contact with the separator and the electrode, thereby adhering the separator and the electrode to each other. That is, dry adhesion and wet adhesion have different mechanisms of adhesion, and a resin having good wet adhesion and a resin having good dry adhesion are generally different. In Patent Documents 1 and 2 described above, a resin composition having good wet adhesion is

proposed, but a resin composition having good dry adhesion is not considered. Also, the adhesive layers disclosed in Patent Document 1 and Patent Document 2 have an issue of low dry adhesion.

Further, in the known art, it has been difficult to enhance the dry adhesion to both the positive electrode and the negative electrode by using only a single polyvinylidene fluoride copolymer. As described above, in case of dry adhesion, the resin in the adhesive layer is softened, and the resin is brought into close contact with the separator and the electrode, and causing the separator and the electrode to adhere to each other. However, it has been difficult to obtain high dry adhesion to both the positive electrode and the negative electrode with a single resin because of a difference in a physical structure of the electrode surface between the positive electrode and the negative electrode and a difference in chemical interaction due to a difference in the binder types used in each electrode.

The present invention has been made in view of the above issues. An object is to provide a resin composition excellent in dry adhesion to both a positive electrode and a negative electrode.

## SOLUTION TO PROBLEM

The present invention provides the following resin composition (coating agent).

A resin composition containing a vinylidene fluoride copolymer containing: 73.7 mass% or more and 96.9 mass% or less of a constituent unit derived from vinylidene fluoride; 0.1 mass% or more and 1.3 mass% or less of a constituent unit containing a carboxy group; and 3 mass% or more and 25 mass% or less of an other constituent unit which does not contain a carboxy group and is derived from a compound copolymerizable with vinylidene fluoride, with the proviso that a total amount of the constituent units constituting the vinylidene fluoride is taken as 100 mass%, in which a solution obtained by dissolving 4 g of the vinylidene fluoride copolymer in 1 L of N,N-dimethylformamide has an intrinsic viscosity at 30°C of 0.5 dL/g or more and 3 dL/g or less.

The present invention also provides the following coating composition (coating liquid).

A coating composition containing the resin composition and a solvent.

The present invention also provides an electrode for stacking as below.

An electrode for stacking, including an electrode; and a resin-containing layer disposed on at least one side of the above electrode, the resin-containing layer containing the resin composition.

The present invention also provides a separator for stacking as below.

A separator for stacking, including a separator; and a resin-containing layer disposed on at least one side of the above separator, the resin-containing layer containing the resin composition.

The present invention also provides a nonaqueous-electrolyte secondary battery as below.

A nonaqueous-electrolyte secondary battery, including a positive electrode; a separator; a negative electrode; and a resin-containing layer which contains the above resin composition between the positive electrode and the separator and/or between the negative electrode and the separator.

The present invention also provides a method for producing a nonaqueous-electrolyte secondary battery as below.

A method for producing a nonaqueous-electrolyte secondary battery, the method including on at least one side of at least one member selected from the group consisting of a positive electrode, a separator, and a negative electrode, applying the coating composition and forming a resin-containing layer by solidifying the coating composition; forming a laminate by stacking the positive electrode, the separator, and the negative electrode with the resin-containing layer located between the positive electrode and the separator, and/or between the negative electrode and the separator; and hot-pressing the laminate.

## ADVANTAGEOUS EFFECTS OF INVENTION

The resin composition of the present invention is excellent in dry adhesion to both the positive electrode and the negative electrode.

## DESCRIPTION OF EMBODIMENTS

### 1. Resin composition (coating agent)

The resin composition (coating agent) of the present invention is a resin composition mainly used for forming a resin-containing layer for fixing an electrode and a separator of a nonaqueous-electrolyte secondary battery. However, use of the resin composition (coating agent) is not limited to the resin-containing layer. In the present specification, the terms "resin composition" and "coating agent" are used with the same meaning.

As described above, in the resin composition containing a known vinylidene fluoride copolymer, it is difficult to simultaneously enhance the dry adhesion to the positive electrode and the dry adhesion to the negative electrode, and

it is particularly difficult to enhance the adhesion to the negative electrode.

As a result of intensive studies on such issues, the present inventors have found that by when a resin composition (resin-containing layer) containing a vinylidene fluoride copolymer having a constituent unit derived from vinylidene fluoride, a constituent unit containing a carboxy group, and constituent units other than these at a predetermined percentage and having an intrinsic viscosity of 0.5 dL/g or more and 3 dL/g or less is disposed between a separator and an electrode, dry adhesion is improved in both a positive electrode and a negative electrode.

The reason for this is thought to be as follows. As described above, in case of dry adhesion, it is necessary that the vinylidene fluoride copolymer in the resin-containing layer is sufficiently softened and sufficiently adheres to the electrode, the separator, and the like. However, the positive electrode and the negative electrode often have different physical structures and chemical structures on surfaces thereof. Specifically, the shape of the active material is different between the positive electrode and the negative electrode, and the smoothness of the electrode surface is naturally different. The smoothness greatly affects the physical adhesion. Meanwhile, binders used in the positive electrode and the negative electrode are often different from each other. For example, the positive electrode binder may be vinylidene fluoride and the negative electrode binder may be styrene-butadiene rubber/carboxymethyl cellulose based, which are greatly different in chemical properties. As described above, in order to exhibit effective adhesion to both of two types of surfaces having different physical structures and chemical structures, it is necessary to introduce a functional group and perform chemical modification while controlling the mechanical properties of the resin.

Therefore, the vinylidene fluoride copolymer contained in the resin composition of the present invention has a certain amount of constituent units other than the constituent unit derived from vinylidene fluoride and the constituent unit containing a carboxy group. Therefore, when the vinylidene fluoride copolymer is softened, it has appropriate flexibility and sufficiently adheres to the electrode and the separator. At this time, a carboxy group in the vinylidene fluoride copolymer chemically interacts with an OH group or the like on the surface of the separator or the electrode. As described above, the vinylidene fluoride copolymer contained in the resin composition of the present invention has different adhesion mechanisms such as softening of the vinylidene fluoride copolymer and chemical interaction between a carboxy group and an electrode, a separator, or the like. Therefore, the chemical interaction between the carboxy group and the electrode, separator, or the like supplements the adhesion force of the electrode surface, which is insufficient in the physical adhesion due to softening. Meanwhile, with respect to the electrode surface in which the chemical interaction between the carboxy group and the electrode, the separator, or the like is insufficient, the adhesion force is supplemented by the physical adhesion due to softening. Therefore, the resin composition of the present invention is excellent in dry adhesion to both the positive electrode and the negative electrode.

Furthermore, the intrinsic viscosity of the vinylidene fluoride copolymer is a physical property representing, for example, the molecular weight of the vinylidene fluoride copolymer, and if the intrinsic viscosity is excessively high, it becomes difficult for the vinylidene fluoride copolymer to adhere to the surface of the electrode or the separator during dry adhesion, for example. Also, when the intrinsic viscosity is excessively low, the stability of the resin composition or the coating composition containing the vinylidene fluoride copolymer decreases, and it becomes difficult to form the resin-containing layer. Meanwhile, in the present invention, since the vinylidene fluoride copolymer has an intrinsic viscosity in a certain range, a resin composition or a coating composition containing the vinylidene fluoride copolymer has good stability and good dry adhesion.

The resin composition of the present invention may contain components other than the vinylidene fluoride copolymer as long as the object and effect of the present invention are not impaired. Examples of the components other than the vinylidene fluoride copolymer include a dispersant, an antifoaming agent, and a wetting agent. However, the amount of the vinylidene fluoride copolymer in the resin composition is preferably 90 mass% or more, and more preferably 95 mass% or more. Hereinafter, the vinylidene fluoride copolymer will be described.

## Vinylidene fluoride copolymer

The resin composition of the present invention may contain the following vinylidene fluoride copolymer, and the resin composition may contain one or more kinds of the vinylidene fluoride copolymer or may contain two or more kinds of the vinylidene fluoride copolymer.

The amount of the constituent unit derived from vinylidene fluoride contained in the vinylidene fluoride copolymer is 73.7 mass% or more and 96.9 mass% or less, preferably 78 mass% or more and 95 mass% or less, and more preferably 83 mass% or more and 93 mass% or less when the total amount of the constituent units for the vinylidene fluoride copolymer is taken as 100 mass%. As described above, when the amount of the constituent unit derived from vinylidene fluoride is 73.7 mass% or more, the vinylidene fluoride copolymer has appropriate crystallinity, and the strength of the resin-containing layer is likely to be appropriately maintained. Meanwhile, when the amount of the constituent unit derived from vinylidene fluoride is 96.9 mass% or less, the amount of the constituent unit containing a carboxy group and the amount of other constituent units are sufficient, the dry adhesion is likely to be enhanced by the interaction of the carboxy group, the resin-containing layer is likely to be softened by heating, and the dry adhesion is likely to be

enhanced. The amount of the constituent unit derived from vinylidene fluoride can be specified by analyzing the vinylidene fluoride copolymer by $^{19}F$-NMR.

The amount of the constituent unit containing a carboxy group contained in the vinylidene fluoride copolymer is 0.1 mass% or more and 1.3 mass% or less, preferably 0.2 mass% or more and 1.0 mass% or less, and more preferably 0.3 mass% or more and 1.0 mass% or less when the total amount of the constituent units for the vinylidene fluoride copolymer is taken as 100 mass%. When the percentage of the constituent unit containing a carboxy group is 0.1 mass% or more, the carboxy group easily interacts with a functional group in an electrode or a separator, or the carboxy groups easily interact with each other, and the dry adhesion of the resin-containing layer containing the resin composition is enhanced. Meanwhile, when the amount of the constituent unit containing a carboxy group is 1.3 mass% or less, the stability of the resin composition, the coating composition, or the like is likely to be enhanced. The amount of the constituent unit containing a carboxy group in the vinylidene fluoride copolymer can be determined by a known method disclosed in, for example, JP 2015-172101 A.

Here, the constituent unit containing a carboxy group is a constituent unit obtained from a compound containing a carboxy group. The kind of the compound containing a carboxy group is not particularly limited, and for example, a compound containing a carboxy group and an unsaturated double bond is preferable. Examples of such a compound include an unsaturated dibasic acid, an unsaturated dibasic acid monoester, and a compound represented by General Formula (1) as below. The vinylidene fluoride copolymer may contain only one kind or two or more kinds of these constituent units.

Examples of the unsaturated dibasic acid include compounds containing an unsaturated double bond and two carboxy groups or acid anhydride groups. The number of carbons in the unsaturated dibasic acid is preferably 5 to 8. Specific examples thereof include fumaric acid, (anhydrous) maleic acid, citraconic acid, and phthalic acid. The term "carboxy group" as used herein includes an acid anhydride.

Examples of the unsaturated dibasic acid monoester include a compound having an unsaturated double bond, one carboxylic acid, and one carboxylic acid ester. The number of carbons in the unsaturated dibasic acid monoester is preferably 5 to 8. Specific examples of the unsaturated dibasic acid monoester include monomethyl fumarate, monoethyl fumarate, monomethyl maleate, monoethyl maleate, monomethyl citraconate, monoethyl citraconate, monomethyl phthalate, and monoethyl phthalate.

General Formula (1) is shown below.

[Chem, 1]

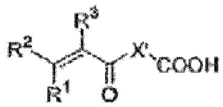

・・・(1)

In the above General Formula (1), $R^1$, $R^2$, and $R^3$ each independently represent a hydrogen atom, a chlorine atom, or an alkyl group having 1 to 5 carbon atoms.

Among them, from the viewpoint of polymerizability, $R^1$, $R^2$, and $R^3$, are preferably groups having small steric hindrance, preferably a hydrogen atom or an alkyl group having 1 to 3 carbon atoms, and more preferably a hydrogen atom or a methyl group. $R^1$, $R^2$, and $R^3$ may all be the same or different from each other.

X' represents an atomic group having 1 to 19 atoms in the main chain and having a molecular weight of 472 or less. Specific examples of X' include various alkylene groups, ether groups, ester bonds, aromatic rings, and combinations thereof. The number of atoms in the main chain of X' is more preferably 1 or more and 14 or less, and still more preferably 1 or more and 9 or less. In the present specification, the main chain of X' means the number of atoms of the skeleton connecting the carbonyl group and the carboxy group in General Formula (1). When X' includes a cyclic structure, there may be a plurality of atoms in the main chain. In this case, the minimum value is treated as the number of atoms in the main chain of X'.

Specific examples of the compound represented by the above General Formula (1) include (meth)acryloyloxypropyl succinate, (meth)acryloyloxyethyl succinate, 2-carboxyethyl acrylate, 2-carboxyethyl methacrylate, acryloyloxyethyl phthalate, (meth)acryloyloxyethyl phthalate, N-carboxyethyl (meth)acrylamide, carboxyethyl thio(meth)acrylate, and carboxymethyl acrylate. In the present specification, (meth)acryloyloxy represents methacryloyloxy, acryloyloxy, or both. Further, (meth)acrylate refers to methacrylate, acrylate, or both, and (meth)acryl refers to methacryl, acryl, or both.

Among the compounds described above, the compound containing a carboxy group is preferably a compound represented by General Formula (1), and is more preferably(meth)acryloyloxypropyl succinate.

Meanwhile, the amount of the other constituent units, which do not contain a carboxy group and are derived from the compound copolymerizable with vinylidene fluoride, contained in the vinylidene fluoride copolymer is 3 mass% or more and 25 mass% or less, preferably 3 mass% or more and 23 mass% or less, and more preferably 5 mass% or more and 20 mass% or less when the total amount of constituent units for the vinylidene fluoride copolymer is taken as 100 mass%. When the percentage of the other constituent units is 3 mass% or more, the flexibility of the vinylidene fluoride copolymer is enhanced, and the dry adhesion of the resin-containing layer containing the resin composition is enhanced. Meanwhile, when the amount of the other constituent units is excessive, it becomes difficult to dissolve in a solvent when a coating composition or the like is formed. However, when the amount of the other constituent units is 25 mass% or less, the vinylidene fluoride copolymer is easily dissolved in a solvent. In addition, when the percentage of the other constituent units is 25 mass% or less, the amount of the constituent unit derived from vinylidene fluoride is increased, and the strength of the resin-containing layer is increased. The amount of other constituent units in the vinylidene fluoride copolymer can be specified by $^{19}F$-NMR.

The other constituent units are constituent units derived from compounds (hereinafter, also referred to as "other compounds") which do not contain a carboxy group and contains a group polymerizable with vinylidene fluoride (for example, an unsaturated double bond) or the like. Examples of other compounds include fluorine-containing monomers other than vinylidene fluoride, and hydrocarbon monomers such as ethylene and propylene.

Examples of the fluorine-containing monomer include vinyl fluoride, trifluoroethylene, tetrafluoroethylene, chlorotrifluoroethylene, hexafluoropropylene, hexafluoroethylene, fluoroalkyl vinyl ether, and perfluoroalkyl vinyl ether represented by perfluoromethyl vinyl ether. Among these, a constituent unit derived from chlorotrifluoroethylene or hexafluoropropylene is preferable from the viewpoint that the dry adhesion and the wet adhesion are easily improved.

Here, the intrinsic viscosity of the vinylidene fluoride copolymer may be 0.5 dL/g or more and 3 dL/g or less, but is more preferably 0.8 dL/g or more and 2.5 dL/g or less, and more preferably 1.0 dL/g or more and 2.0 dL/g or less. When the intrinsic viscosity is 0. 5 dL/g or more, a coating composition or the like described below containing the resin composition is more stable. Meanwhile, when the intrinsic viscosity is 3 dL/g or less, the resin composition layer is easily softened by heating and the dry adhesion is easily enhanced.

The intrinsic viscosity is a value determined from the viscosity $\eta_1$ of a solution obtained by dissolving 4 g of a vinylidene fluoride copolymer in 1 L of N,N-dimethylformamide, and the viscosity $\eta_0$ of N,N-dimethylformamide measured in a thermostatic bath at 30°C using an Ubbelohde viscometer. The intrinsic viscosity $\eta$ is determined by the following equation:

$$\text{Intrinsic viscosity } \eta = (1/C) \cdot \ln(\eta_1/\eta_0)$$

In the above equation, C is a concentration per unit of the resin composition, and is 0.4 g/dl here.

The melting point of the vinylidene fluoride copolymer is preferably 100°C or higher and 165°C or lower, and more preferably 120°C or higher and 160°C or lower. When the melting point of the vinylidene fluoride copolymer is 100°C or higher, the heat resistance of the obtained resin-containing layer tends to be good. Meanwhile, when the melting point of the vinylidene fluoride copolymer is 165°C or lower, the polymer is easily softened by heating, and dry adhesion can be performed at a relatively low temperature. The melting point of the vinylidene fluoride copolymer can be specified by calorimetry with a differential scanning calorimeter (DSC). Specifically, the vinylidene fluoride copolymer is heated from 30°C to 230°C at 10°C/min (first heating), cooled from 230°C to 30°C at 10°C/min (first cooling), further heated from 30°C to 230°C at 10°C/min (second heating), and a melting peak is specified by DSC. And then, the maximum melting peak temperature observed in the second heating is specified as a melting point of the vinylidene fluoride copolymer.

The weight average molecular weight of the vinylidene fluoride copolymer is preferably 50,000 to 1,200,000, more preferably 100,000 to 1,000,000, and still more preferably 150,000 to 1,000,000. The weight average molecular weight is a value in terms of polystyrene measured by gel permeation chromatography (GPC). When the weight average molecular weight of the vinylidene fluoride copolymer is in the above range, the resin composition easily satisfies the above melt viscosity.

The vinylidene fluoride copolymer having a carboxy group is obtained by copolymerizing vinylidene fluoride, a compound containing a carboxy group, and another compound by a known method. Examples of the method for copolymerizing them include suspension polymerization, emulsion polymerization, and solution polymerization. In order to adjust the melt viscosity within the above range, the amounts of the initiator and the chain transfer agent, the polymerization temperature, and the like are adjusted.

## 2. Coating composition (coating liquid)

The coating composition (coating liquid) of the present invention is a composition for forming a resin-containing

layer for mainly bonding a separator and an electrode of a non-electrolyte secondary battery, and includes the above-described resin composition. The coating composition (coating liquid) may be, for example, a composition in which the above-described resin composition is dispersed or dissolved in a solvent, and may further contain an inorganic filler or the like. Further, as long as the objective and effect of the present invention are not impaired, various additives may be included. Here, the use of the coating composition (coating liquid) is not limited to the formation of the resin-containing layer. In the present specification, the terms "coating composition" and "coating liquid" are used with the same meaning.

The amount of resin composition in the coating composition is appropriately selected depending on the coating method of the coating composition, the desired thickness of the resin-containing layer, and the like. Usually, the coating composition contains, in its solid content, the resin composition in an amount of preferably 3 mass% or more and 50 mass% or less, more preferably 5 mass% or more and 40 mass% or less, and still more preferably 10 mass% or more and 30 mass% or less. When the resin composition (mainly vinylidene fluoride copolymer) is contained in the solid content of the coating composition in the above ranges, the electrode and the separator can firmly adhere to each other.

The type of the solvent contained in the coating composition is not particularly limited as long as the solvent can uniformly dissolve or disperse the resin composition. Examples of the solvent include N-methyl-2-pyrrolidone, N,N-dimethylformamide, N,N-dimethylacetamide, dimethylsulfoxide, hexamethylphosphoramide, dioxane, tetrahydrofuran, tetramethylurea, triethyl phosphate, trimethyl phosphate, acetone, 2-butanone, and cyclohexanone. The coating composition may contain only one solvent or may contain two or more solvents.

The amount of the solvent is appropriately selected depending on the coating method of the coating composition, the desired thickness of the resin-containing layer, and the like.

The inorganic filler is not particularly limited as long as it has insulating properties and resistance to heat during dry adhesion or wet adhesion. As described above, when the coating composition and the resin-containing layer contain the filler, the mechanical strength of the resin composition layer is easily maintained.

Examples of the inorganic fillers include SrTiOs, $SnO_2$, $CeO_2$, MgO, NiO, CaO, ZnO, $ZrO_2$, $Y_2O_3$, $Al_2O_3$, $TiO_2$, SiC, clay minerals, mica, calcium carbonate, and the like. The coating composition may contain only one filler or may contain two or more fillers. From the viewpoint of safety of secondary battery and stability of coating liquid, the inorganic filler is preferably $Al_2O_3$, or MgO, or ZnO. From the viewpoint of insulating properties and electrochemical stability, it is more preferably $Al_2O_3$.

As the inorganic filler, a commercially available product may be used. For example, AKP-3000, AKP-50, AKP-20 (all available from Sumitomo Chemical Co., Ltd.), and the like, which are commercially available as high-purity alumina particles, may be used.

The median diameter of the inorganic filler as measured by a laser diffraction scattering method is preferably 10 $\mu$m or less, more preferably 0.05 $\mu$m or more and 5 $\mu$m or less, and still more preferably 0.10 $\mu$m or more and 2 $\mu$m or less. When the median diameter of the inorganic filler is 10 $\mu$m or less, the thickness of the resin-containing layer does not become excessively large, and it is easy to make the secondary battery thin.

The amount of the inorganic filler in the coating composition is appropriately selected depending on the coating method of the coating composition, the desired thickness of the resin-containing layer, and the like, and is preferably 30 mass% or more and 99 mass% or less, more preferably 50 mass% or more and 95 mass% or less, and still more preferably 70 mass% or more and 90 mass% or less, based on the solid content of the coating composition. When the inorganic filler is contained in an amount of 30 mass% or more in the solid content of the coating composition, the OH group on the surface of the inorganic filler and the carboxy group of the vinylidene fluoride copolymer easily interact with each other in case of wet adhesion, and the shape of the resin-containing layer is easily maintained. In addition, the mechanical strength of the laminate is increased and the safety is improved.

The method for mixing the resin composition with the inorganic filler or the solvent is not particularly limited, and the resin composition can be mixed by a known method.

3. Nonaqueous-electrolyte secondary battery

The secondary battery of the present invention includes a laminate including a positive electrode, a separator, and a negative electrode, a nonaqueous-electrolyte solution, and an exterior body covering these components. In addition, a resin-containing layer containing the resin composition is disposed between the positive electrode and the separator and/or between the negative electrode and the separator of the laminate. The resin-containing layer may be disposed either between the positive electrode and the separator or between the negative electrode and the separator. However, when the resin-containing layer is disposed in both, shifting, wrinkles, and the like are less likely to occur in the electrode and the separator, and the strength and performance of the obtained secondary battery are improved.

Note that the secondary battery may have any of the structures such as a coin-type battery, a button-type battery, a cylindrical battery, a prismatic battery, a laminate-type battery or the like. Hereinafter, each configuration of the secondary battery will be described.

• Electrode (positive electrode and negative electrode)

The electrode included in the secondary battery may be the same as the electrode of a known secondary battery. The electrode usually includes a current collector and a mixture layer containing an active material disposed on at least one side of the current collector.

The material of the current collector for the negative electrode and the positive electrode is not particularly limited as long as electricity can be extracted. Examples of the current collector include metal foils and metal nets of aluminum, copper, iron, stainless steel, steel, nickel, and titanium. Furthermore, the surface of another medium may be coated with the above metal foil, metal steel, or the like. The thickness of the current collector is usually 5 μm or more and 100 μm or less.

Meanwhile, the mixture layer is a layer containing an electrode active material and a binder, and optionally containing a conductivity aid or the like. The percentage of the components constituting the mixture layer can be the same as that of the mixture layer of a known secondary battery. The thickness of the mixture layer is appropriately adjusted according to the type of the secondary battery, and is usually 20 μm or more and 250 μm or less.

Specific examples of positive electrode active material included in the positive electrode mixture layer include composite metal chalcogenide compounds represented by a general formula $LiMY_2$ such as $LiCoO_2$ or $LiNixCo_{1-x}O_2$ ($0 \leq x \leq 1$), where M represents at least one of the transition metals such as Co, Ni, Fe, Mn, Cr, or V, and Y is a chalcogen element such as O or S; composite metal oxides having a spinel structure such as $LiMn_20_4$, and olivine-type lithium compounds such as $LiFePO_4$. Note that the positive electrode active material may be a commercially available product.

Examples of the negative electrode active material included in the negative electrode mixture layer include a carbon material, a metal · alloy material, and a metal oxide. Among them, the carbon material is preferable. Examples of the carbon material include artificial graphite, natural graphite, non-graphitizable carbon, and easily graphitizable carbon. When such a carbon material is used, the energy density of the secondary battery is likely to be increased. Artificial graphite is obtained, for example, by carbonizing an organic material, performing heat treatment at a high temperature, and pulverizing and classifying the resulting mixture. The non-graphitizable carbon can be obtained by firing a material derived from a petroleum pitch at 1,000°C or higher to 1,500°C or lower. Note that these negative electrode active material may be a commercially available product.

The specific surface area of the positive electrode active material is preferably 0.05 $m^2/g$ or more and 50 $m^2/g$ or less. Meanwhile, the specific surface area of the negative electrode active material is preferably 0.3 $m^2/g$ or more and 10 $m^2/g$ or less. The specific surface area of the electrode active materials can be determined by a nitrogen adsorption method.

In addition, the binder contained in the mixture layer is not particularly limited as long as it can bind the electrode active material and a conductivity aid described later. Examples thereof include fluorine-containing resins such as polytetrafluoroethylene, polyvinylidene fluoride, and fluororubber; a mixture of styrene-butadiene rubber and carboxymethyl cellulose; and thermoplastic resins such as polypropylene and polyethylene.

As the fluorine-containing resin, a vinylidene fluoride-based copolymer can also be used. Examples of the vinylidene fluoride-based copolymer include a vinylidene fluoride-maleic acid monomethyl ester copolymer and a vinylidene fluoride-based copolymer obtained by copolymerizing vinylidene fluoride and the above-described compound containing a carboxy group.

In addition, the conductivity aid contained in the electrode mixture layer may be a substance capable of improving the conductivity of the electrode mixture layer. Examples of the conductivity aid include carbonaceous substances such as carbon black, graphite fine powder, and carbon fiber, metal fine powder such as nickel and aluminum, and metal fiber.

The method for forming the electrode is not particularly limited, and for example, the electrode can be formed by applying a slurry containing an electrode active material, a binder, a conductivity aid, and a nonaqueous solvent onto a current collector, and drying (solidifying) the slurry. Examples of the nonaqueous solvent include N-methyl-2-pyrrolidone. The method for applying the slurry is not particularly limited, and includes a method for applying the slurry by a bar coater, a die coater, or a comma coater. The drying temperature is usually preferably 50°C or higher and 150°C or lower, and the drying time is 1 minute or more and 300 minutes or less. The atmosphere during drying is not particularly limited, and may be under an inert gas such as nitrogen or under reduced pressure. After drying, heat treatment may be further performed as necessary. Instead of the heat treatment or after the heat treatment, a press treatment may be further performed. When the press treatment is performed, the pressure is usually preferably 1 MPa (G) or more and 200 MPa (G) or less. When the press treatment is performed, the electrode density is improved.

• Separator

The separator included in the secondary battery is not particularly limited as long as it can electrically insulate the positive electrode and the negative electrode from each other and can hold the electrolyte solution. Examples of the separator include a single-layer or multi-layer porous membrane containing polyolefin-based polymers such as polyethylene and polypropylene; polyester-based polymers such as polyethylene terephthalate; aromatic polyamide-based polymers, polyimide-based polymers such as polyetherimide; polyethersulfone; polysulfone; polyether ketone; polystyrene; polyethylene oxide; polycarbonate; polyvinyl chloride; polyacrylonitrile; polymethyl methacrylate; and ceramics, and nonwoven fabrics. Glass, paper, or the like may also be used.

Among them, a porous membrane of a polyolefin-based polymer (for example, polyethylene, polypropylene, or the like) is preferable. Examples of the commercially available polyolefin-based polymer porous membrane include CELGARD (registered trademark) (single-layer polypropylene separator, single-layer polyethylene separator, three-layer of polypropylene/polyethylene/polypropylene separator, and the like) available from Polypore International, Inc., HIPORE (registered trademark) (single layer polyethylene) available from ASAHI KASEI CORPORATION, and SETELA (registered trademark) (single layer polyethylene) available from Toray Industries, Inc. The separator may be subjected to a surface treatment, or a layer of inorganic particles may be coated in advance.

• Resin-containing layer

The resin-containing layer is a layer obtained by applying and solidifying a composition containing the above-described resin composition, that is, the above-described coating composition. The resin-containing layer may be disposed at least one of between the positive electrode and the separator and between the negative electrode and the separator, and in a case where the resin-containing layer is disposed at both, the strength, the conveyability, and the like of the laminate are enhanced. In addition, the resin composition exhibits high adhesion to both the positive electrode and the negative electrode. Therefore, there is an advantage that it can be used for both adhesion between the positive electrode and the separator and adhesion between the negative electrode and the separator.

The thickness of the resin-containing layer is preferably 0.2 $\mu$m or more to 25 $\mu$m or less, and more preferably 0.5 $\mu$m or more to 20 $\mu$m or less. The method for forming the resin-containing layer will be described in detail later.

• Nonaqueous-electrolyte solution

The nonaqueous-electrolyte solution is a solution obtained by dissolving an electrolyte in a nonaqueous solvent. Examples of the nonaqueous solvent include aprotic organic solvents that are capable of transporting cations and anions constituting the electrolyte and that do not substantially diminish the function of the secondary battery.

Examples of such nonaqueous solvent include organic solvents usually used as nonaqueous-electrolyte solutions of lithium-ion secondary batteries, and specific examples thereof include carbonates, hydrocarbon halides, ethers, ketones, nitriles, lactones, esters, and oxolane compounds. Among these, propylene carbonate, ethylene carbonate, dimethyl carbonate, diethyl carbonate, ethylmethyl carbonate, 1,2-dimethoxyethane, 1,2-diethoxyethane, methyl propionate, ethyl propionate, succinonitrile, 1,3-propane sultone, fluoroethylene carbonate, vinylene carbonate, and the like are preferred. The nonaqueous-electrolyte solution may contain only one nonaqueous solvent or may contain two or more nonaqueous solvents.

The electrolyte is not particularly limited as long as it can transport cations and anions by the nonaqueous solvent and does not substantially impair the function of the secondary battery. Examples of the electrolyte when the nonaqueous-electrolyte secondary battery is a lithium ion secondary battery include lithium salts of fluoro complex anions, such as $LiPF_6$, $LiAsF_6$, and $LBF_4$; inorganic lithium salts, such as $LiClO_4$, LiCl, and LiBr; lithium sulfonate salts, such as $LiCH_3SO_3$ and LiCFsSOs; and organic lithium salts, such as $Li(CF_3OSO_2)_2N$, $Li(CF_3OSO_2)_3C$, $Li(CF_3SO_2)_2N$, and $Li(CF_3SO_2)_3C$. The nonaqueous-electrolyte solution may contain only one type of electrolyte or may contain two or more types of electrolytes.

• Exterior body

The shape of the exterior body of the secondary battery is not particularly limited and is appropriately selected in accordance with the use of the secondary battery or the like. The exterior body may be any exterior body as long as it can hold the above-described laminate including the electrode, the separator, and the resin-containing layer, and the nonaqueous-electrolyte solution, and may be, for example, a cylindrical can or a laminate pouch.

Method for producing nonaqueous-electrolyte secondary battery

A method for producing the secondary battery will be described. Hereinafter, a case where the resin-containing layer is formed between the electrode and the separator and between the negative electrode and the separator will be described as an example. However, as described above, the resin-containing layer may be disposed on only one of the electrode and the separator.

The method for producing a secondary battery of the present invention includes, at least, a step of forming a

resin-containing layer containing the resin composition on at least one side of at least one member selected from the group consisting of a positive electrode, a separator, and a negative electrode (resin-containing layer forming step); and a step of forming a laminate by stacking the positive electrode, the separator, and the negative electrode with the resin-containing layer located between the positive electrode and the separator and between the negative electrode and the separator (stacking step); and a step of hot-pressing the laminate (hot-pressing step). Before or after the hot-pressing step, a step of packing the laminate into the exterior body and impregnating the laminate with a nonaqueous-electrolyte solution (nonaqueous-electrolyte solution impregnation step) may be included.

• Resin-containing layer forming step

In the resin-containing layer forming step, a resin-containing layer containing the above-described resin composition is formed on at least one side of at least one member selected from the group consisting of a positive electrode, a separator, and a negative electrode. The method for forming the resin-containing layer may be a method of applying a coating composition and solidifying the coating composition, and any one of the following methods can be used.

(1) A coating composition is applied to one side of an electrode (positive electrode or negative electrode) and solidified to form a laminate of the electrode and a resin-containing layer (also referred to as a "electrode for stacking" in the present specification).

(2) The coating composition is applied to one side or both sides of the separator and solidified to form a laminate of the separator and the resin-containing layer (also referred to as a "separator for stacking" in the present specification).

(3) The coating composition described above is applied onto a separately prepared base material and solidified, then the coating film is peeled off from the base material, and the coating film is attached to a separator or an electrode. Examples of the substrate include a substrate made of polyethylene terephthalate (PET).

Among the above methods, the method (1) for forming the electrode for stacking and the method (2) for forming the separator for stacking are preferable from the viewpoint of simplification of a step of peeling off a base material and a step of stacking. In particular, the method (2) for forming a separator for separator for stacking is particularly preferable because the resin-containing layer can be formed without affecting the electrode.

A method for applying the coating composition is not particularly limited. Examples thereof include methods for applying the coating composition by using a bar coater; a die coater; a comma coater; a gravure coater of direct gravure method, reverse gravure method, kiss reverse gravure method, offset gravure method, or the like; a reverse roll coater; a microgravure coater; an air-knife coater; a dip coater; or the like.

Examples of the method for solidifying the coating composition include immersion in a non-solvent and drying. These may be combined. As the non-solvent, a solvent which does not dissolve the resin composition such as water can be used. In addition to the non-solvent, a poor solvent such as ethanol may be contained. The drying temperature in the case of drying is usually preferably 40°C or higher and 190°C or lower, and more preferably 50°C or higher and 180°C or lower. The drying time is preferably 1 second or more and 15 hours or less. In addition, the atmosphere during drying is not particularly limited, and drying may be performed under an inert gas atmosphere such as nitrogen or under reduced pressure. After drying, heat treatment may be further performed as necessary.

• Stacking step

In the stacking step, the members are arranged in the order of the positive electrode, the resin-containing layer, the separator, the resin-containing layer, and the negative electrode. The stacking method in the stacking step is appropriately selected depending on which method is used to prepare the resin-containing layer. For example, when the electrode for stacking in which the resin-containing layer is stacked on one side of the electrode is prepared in the resin-containing layer forming step, the electrode for stacking and the separator are stacked with the resin-containing layer of the electrode for stacking and the separator facing each other. When the separator for stacking in which the resin-containing layers are formed on both sides of the separator is prepared in the resin-containing layer forming step, the separator for stacking is sandwiched between the positive electrode and the negative electrode.

The laminate formed in the stacking step may include only one unit constituted by the positive electrode, the resin-containing layer, the separator, the resin-containing layer, and the negative electrode, or may include a plurality of such units. When a plurality of units are stacked, a resin-containing layer or a separator may be further disposed between the units.

• Hot-pressing step

The hot-pressing step is a step of hot-pressing the laminate produced in the above-described stacking step. In the present invention, when dry adhesion is performed before the laminate is impregnated with the nonaqueous-electrolyte solution, the resin-containing layer firmly adheres to the separator and the electrode. Therefore, in the hot-pressing step, at least dry adhesion is preferably performed, and wet adhesion may be further performed after the laminate is impregnated with the nonaqueous-electrolyte solution. In the method for producing a secondary battery of the present invention, high adhesion to both the positive electrode and the negative electrode can be obtained by dry adhesion. In addition, the adhesion between the layers of the laminate is further improved by performing the wet adhesion.

(1) Dry adhesion

Dry adhesion is performed before the laminate is impregnated with the nonaqueous-electrolyte solution. In consideration of the heat resistance of the electrode and the separator, the temperature in case of dry adhesion is appropriately selected with the lowest temperature as the upper limit among temperatures at which a significant change (including a chemical structure change due to decomposition and a simple state change such as melting and vaporization) is observed in either the electrode or the separator. The temperature is, for example, preferably 40°C or higher and 220°C or lower, and more preferably 50°C or higher and 120°C or lower. The heating time is preferably 1 second or more and 15 hours or less. In addition, the pressure during pressing is appropriately selected with the lowest pressure as the upper limit among the pressures at which a significant structural change (a change in the density of the electrode, breakage, a change in the air permeability of the separator, or the like) is observed in either the electrode or the separator. For example, the pressure during pressing is preferably 0.01 MPa (G) or more and 30 MPa (G), and more preferably 0.5 MPa (G) or more and 20 MPa (G) or less.

(2) Wet adhesion

Wet adhesion is performed after the laminate is impregnated with the nonaqueous-electrolyte solution. In consideration of the heat resistance of the electrode, the separator, and electrolyte solution, the temperature in case of wet adhesion is appropriately selected with the lowest temperature as the upper limit among temperatures at which a significant change (including a chemical structure change due to decomposition and a simple state change such as melting and vaporization) is observed in any one of the electrode, the separator, and the nonaqueous-electrolyte solution. For example, the temperature during hot-pressing is preferably room temperature or higher and 130°C or lower, and more preferably 40°C or higher and 100°C or lower. The pressure during pressing is preferably 0.01 MPa (G) or more and 10 MPa (G), and more preferably 0.1 MPa (G) or more and 8 MPa (G) or less. Further, the laminate and the nonaqueous-electrolyte solution may be preheated before hot-pressing. The heating time is preferably 1 second or more and 1 hour or less. The pressing time at the above pressure is more preferably 1 second or more and 1 hour or less.

• Nonaqueous-electrolyte solution impregnation step

As described above, the method may further include a step of packing the dry-adhered laminate or the non dry-adhered laminate into the above-described exterior body and impregnating the exterior body with the nonaqueous-electrolyte solution. The method of filling the laminate and impregnating the nonaqueous-electrolyte solution is the same as the known method of filling the laminate and impregnating the nonaqueous-electrolyte solution in secondary batteries.

## EXAMPLES

The present invention will be described in further detail below with reference to examples. The scope of the present invention is not to be construed as being limited by these examples.

1. Preparation of resin composition

Each resin composition (vinylidene fluoride copolymer) was prepared by the following procedures.

(1) Example A1 (Preparation of vinylidene fluoride copolymer 1)

An autoclave with a volume of 2 L was charged with 286 parts by mass of ion-exchanged water, 0.1 parts by mass of methylcellulose, 82 parts by mass of vinylidene fluoride (VDF), 18 parts by mass of hexafluoropropylene (HFP), 0.5 parts by mass of acryloyloxypropylsuccinic acid (APS), and 1.5 parts by mass of diisopropylperoxydicarbonate, and

the mixture was polymerized at 28°C. The obtained copolymer was heat-treated at 95°C for 60 minutes, then spin-dried, washed with water, and further dried at 80°C for 20 hours to obtain VDF-HFP-APS. The polymer particles contained 15.3 mass% of HFP and 0.3 mass% of APS, and η was 1.7 dL/g. This copolymer was defined as a copolymer 1.

(2) Example A2 (Preparation of vinylidene fluoride copolymer 2)

VDF-HFP-APS was polymerized in the same manner as in the copolymer 1 to obtain a copolymer 2. The copolymer 2 contained 6.0 mass% of HFP and 0.8 mass% of APS, and η was 1.5 dL/g.

(3) Example A3 (Preparation of vinylidene fluoride copolymer 3)

VDF-HFP-APS was polymerized in the same manner as in the copolymer 1 to obtain a copolymer 3. The copolymer 3 contained 9.1 mass% of HFP and 0.9 mass% of APS, and η was 1.5 dL/g.

(4) Comparative Example A1 (Preparation of vinylidene fluoride copolymer 4)

VDF-APS was polymerized in the same manner as in the copolymer 1 to obtain a copolymer 4 except that HFP was not added. The copolymer 4 contained 0.7 mass% of APS and η was 2.5 dL/g.

(5) Comparative Example A2 (Preparation of vinylidene fluoride copolymer 5)

VDF-HFP-APS was polymerized in the same manner as in the copolymer 1 to obtain a copolymer 5. The copolymer 5 contained 7.8 mass% of HFP and 0.3 mass% of APS, and η was 3.3 dL/g.

(6) Comparative Example A3 (Preparation of vinylidene fluoride copolymer 6)

VDF-HFP-APS was polymerized in the same manner as in the copolymer 1 to obtain a copolymer 6. The copolymer 6 contained 26.0 mass% of HFP and 0.4 mass% of APS, and η was 1.9 dL/g.

(7) Comparative Example A4 (Preparation of vinylidene fluoride copolymer 7)

VDF-HFP was polymerized in the same manner as in the copolymer 1 to obtain a copolymer 7 except that APS was not added. The copolymer 7 contained 13.5 mass% of HFP and η was 1.4 dL/g.

(8) Comparative Example A5 (Preparation of vinylidene fluoride copolymer 8)

VDF-HFP-APS was polymerized in the same manner as in the copolymer 1 to obtain a copolymer 8. The copolymer 8 contained 5.6 mass% of HFP and 1.5 mass% of APS, and η was 1.5 dL/g.

2. Analysis of resin composition (vinylidene fluoride copolymer)

Regarding the vinylidene fluoride copolymers prepared in Examples A1 to A3 and Comparative Examples A1 to A5, the amount of the constituent unit was specified by the following method, and the intrinsic viscosity of the vinylidene fluoride copolymer was measured by the following method. The results are indicated in Table 1.

(1) Specifying amount of constituent unit of vinylidene fluoride copolymer

The amount of the constituent units constituting the vinylidene fluoride copolymer was specified by $^{1}$H-NMR and $^{19}$F-NMR.

(2) Measurement of intrinsic viscosity η

A resin composition-containing solution was prepared by dissolving 4 g of the vinylidene fluoride copolymer prepared in each of Examples A1 to A3 and Comparative Examples A1 to A5 in 1 L of N,N-dimethylformamide. Then, the viscosity $\eta_1$ of the resin composition-containing solution was measured in a thermostatic bath at 30°C using an Ubbelohde viscometer. Similarly, the viscosity $\eta_0$ of N,N-dimethylformamide was measured in a thermostatic bath at 30°C using the Ubbelohde viscometer. Then, the intrinsic viscosity η was determined based on the following equation.

$$\text{Intrinsic viscosity } \eta = (1/C) \cdot \ln(\eta_1/\eta_0)$$

In the above equation, C is a concentration per unit of the resin composition, and is 0.4 g/dl here.

[Table 1]

| | | Composition of vinylidene fluoride copolymer (mass%) | | | Intrinsic viscosity η (dL/g) |
|---|---|---|---|---|---|
| | | VDF | HFP | APS | |
| Example A1 | Copolymer 1 | 84.4 | 15.3 | 0.3 | 1.7 |
| Example A2 | Copolymer 2 | 93.2 | 6 | 0.8 | 1.5 |
| Example A3 | Copolymer 3 | 90.0 | 9.1 | 0.9 | 1.5 |
| Comparative Example A1 | Copolymer 4 | 99.3 | - | 0.7 | 2.5 |
| Comparative Example A2 | Copolymer 5 | 91.9 | 7.8 | 0.3 | 3.3 |
| Comparative Example A3 | Copolymer 6 | 73.6 | 26.0 | 0.4 | 1.9 |
| Comparative Example A4 | Copolymer 7 | 86.5 | 13.5 | - | 1.4 |
| Comparative Example A5 | Copolymer 8 | 92.9 | 5.6 | 1.5 | 1.5 |

3. Preparation of coating composition and production of secondary battery

(1) Examples B1 to B3 and Comparative Examples B1 to B5

•Preparation of coating composition

The resin composition was dispersed in N-methyl-2-pyrrolidone (NMP) at room temperature so that the concentration of the resin composition was 5 mass%, and then the solution temperature was raised to 50°C to dissolve the resin composition (hereinafter, referred to as a polymer solution). 400 parts by mass of the polymer solution (resin composition: 20 parts by mass) and 80 parts by mass of alumina particles (AKP-20, available from Sumitomo Chemical Co., Ltd., average particle diameter: 0.46 μm) were mixed, and NMP was added to obtain a coating composition with a solid content of 15 mass%.

4. Evaluation of resin-containing layer

(1) Production of positive electrode

A slurry was produced by adding NMP to 94 parts by mass of $LiNiCoMnO_2$ (available from MX6 Umicore), 3 parts by mass of a conductivity aid (available from SuperP TIMCAL), and 3 parts by mass of PVDF (polyvinylidene fluoride) (KF # 7200, available from Kureha Corporation). The slurry was applied on an Al foil (the thickness is 15 μm). After drying, it was pressed, and heat treatment was performed at 120°C for 3 hours to obtain a positive electrode with an electrode bulk density of 3.0 $g/cm^3$ and a basis weight of 103 $g/m^2$.

(2) Production of negative electrode

A slurry was produced by adding into water 95 parts by mass of BTR918 (modified natural graphite, available from BTR), 2 parts by mass of a conductivity aid (available from Super P TIMCAL), 2 parts by mass of SBR (styrene-butadiene rubber) latex (BM-400 available from Zeon Corporation), and 1 part by mass of CMC (carboxymethyl cellulose) (Cellogen 4H, available from Dai-ichi Kogyo Seiyaku Co., Ltd.). The slurry was applied on a Cu foil (the thickness is 10 μm). After drying, it was pressed, and heat treatment was performed at 150°C for 3 hours and pressing was performed to obtain a negative electrode with an electrode bulk density of 1.6 g/cm$^3$ and a basis weight of 60 g/m$^2$.

(3) Preparation of separator for stacking

The coating composition was sequentially coated on one side of a separator (single-layer polyethylene, thickness: 20 μm) using a wire bar with a wet coating thickness of 24 μm. Then, the resultant was immersed in a coagulation bath (water) for 3 minutes. Thereafter, it was immersed in a washing solution (water) for 1 minute, and dried at 70°C for 30 minutes under nitrogen. Furthermore, the heat treatment in vacuum was performed at 70°C for 2 hours.

(4) Wet adhesion of resin-containing layer

The positive electrode obtained as described above was cut into a size of 2.5 × 5.0 cm, the separator for stacking was cut into a size of 3.0 × 6.0 cm, and the positive electrode mixture layer of the positive electrode and the resin-containing layer of the separator for stacking adhered so as to face each other. The adhesion body was placed in an aluminum laminate pouch, 160 μL of an electrolyte solution (Mixture of EC (ethylene carbonate)/EMC (ethyl methyl carbonate) = 3/7 (volume ratio), 1.2 M $LiPF_6$, and VC (vinylene carbonate) (concentration of VC: 1 mass%)) was injected, vacuum-sealed, and allowed to stand at 25°C overnight. From the outside of the aluminum laminate pouch, hot-pressing was performed using a flat plate press machine to adhere the separator for stacking to the positive electrode, thereby obtaining a sample for measuring peel strength (separator for stacking/positive electrode). The sample for measuring peel strength was prepared by performing hot-pressing at a surface pressure of about 4 MPa (G) for 2 minutes after preheating at an optional temperature for 1 minute. The positive electrode current collector side of the produced sample for measuring peel strength was fixed to a support, the support was fixed to a tensile tester ("STA-1150 UNIVERSAL TESTING MACHINE" available from ORIENTEC Corporation), the separator was subjected to a 180° peel test at a head speed of 200 mm/min, and the peel strength between the resin-containing layer and the positive electrode was measured.

(5) Dry adhesion of resin-containing layer

The positive electrode or negative electrode obtained as described above was cut into 2.5 × 5.0 cm. Meanwhile, the separator for stacking was cut into 3.0 × 6.0 cm. Then, the positive electrode mixture layer of the positive electrode or the negative electrode mixture layer of the negative electrode adhered to the resin-containing layer of the separator for stacking so as to face each other.

The adhesion body was hot-pressed using a roll press machine to bond the resin-containing layer of the separator for stacking to the positive electrode or the negative electrode, thereby obtaining a sample for measuring peel strength. A sample for measuring peel strength was prepared by performing hot-pressing at 70°C, 2 rpm, and a linear pressure of about 4 N/mm.

The current collector side of the positive electrode or the negative electrode of the produced sample for measuring peel strength was fixed to a support, the support was fixed to a tensile tester ("STA-1150 UNIVERSAL TESTING MACHINE" available from ORIENTEC Corporation), the separator was subjected to a 180° peel test at a head speed of 200 mm/min, and the peel strength between the positive electrode and the resin-containing layer, and each of the peel strength between the negative electrode and the resin-containing layer was measured.

[Table 2]

| | Vinylidene fluoride copolymer | | Inorganic filler | | Wet adhesion (gf/mm) | Dry adhesion (gf/mm) | |
|---|---|---|---|---|---|---|---|
| | Type | Amount (mass%) | Type | Amount | Positive electrode | Positive electrode | Negative electrode |
| Example B1 | Copolymer 1 | 20 | $Al_2O_3$ | 80 | 2.0 | 2.3 | 1.8 |
| Example B2 | Copolymer 2 | 20 | $Al_2O_3$ | 80 | 1.3 | 2.0 | 1.9 |

(continued)

| | Vinylidene fluoride copolymer | | Inorganic filler | | Wet adhesion (gf/mm) | Dry adhesion (gf/mm) | |
|---|---|---|---|---|---|---|---|
| | Type | Amount (mass%) | Type | Amount | Positive electrode | Positive electrode | Negative electrode |
| Example B3 | Copolymer 3 | 20 | $Al_2O_3$ | 80 | 1.2 | 2.1 | 1.8 |
| Comparative Example B1 | Copolymer 4 | 20 | $Al_2O_3$ | 80 | 2.0 | 0.3 | 0.2 |
| Comparative Example B2 | Copolymer 5 | 20 | $Al_2O_3$ | 80 | 3.0 | 0.3 | 0.3 |
| Comparative Example B3 | Copolymer 6 | 20 | $Al_2O_3$ | 80 | 1.6 | 2.2 | 1.2 |
| Comparative Example B4 | Copolymer 7 | 20 | $Al_2O_3$ | 80 | 0.5 | 0.4 | 0.6 |
| Comparative Example B5 | Copolymer 8 | 20 | $Al_2O_3$ | 80 | 1.5 | 1.3 | 1.3 |

As indicated in Table 2, in the separators for stacking produced using the resin compositions of Examples A1 to A3 in which a constituent unit derived from vinylidene fluoride is 73.7 mass% or more and 96.9 mass% or less, a constituent unit containing a carboxy group is 0.1 mass% or more and 1.5 mass% or less, and other constituent units were 3 mass% or more and 30 mass% or less with respect to a total amount of the constituent units constituting the vinylidene fluoride copolymer, and an intrinsic viscosity at 30°C of a solution obtained by dissolving 4 g of the vinylidene fluoride copolymer in 1 L of N,N-dimethylformamide is 0.5 dL/g or more and 3 dL/g or less, satisfactory results were obtained in dry adhesion of both of the positive electrode and the negative electrode. In addition, at this time, wet adhesion was also sufficiently secured (Examples B1 to B3).

On the other hand, in the case where the vinylidene fluoride copolymer did not contain a constituent unit containing a carboxy group, the dry adhesion to any of the electrodes was low in the resin-containing layer of the separator for stacking (Comparative Example B4). It is considered that when the laminates were heated, softened, and brought into close contact with each other, the resin-containing layer was not able to chemically interact with an OH group or the like on the surface of the electrode or the separator, and thus it was difficult to obtain high adhesion. Meanwhile, even when the vinylidene fluoride copolymer did not contain other constituent units, the dry adhesion was low (Comparative Example B1). It is considered that the flexibility of the vinylidene fluoride copolymer was low, and the vinylidene fluoride copolymer hardly adhered to the electrode or the separator. Also, when the intrinsic viscosity of the vinylidene fluoride copolymer was excessively high, the dry adhesion was low (Comparative Example B2). It is considered that although the intrinsic viscosity was high, the resin composition had low mobility even when softened by hot-pressing, and the vinylidene fluoride copolymer was less likely to bite into the electrode and the separator, so that the adhesive strength was less likely to increase. Furthermore, when the amount of the other constituent unit was excessively large, the adhesion of the negative electrode was likely to be low (Comparative Example B3). Meanwhile, when the amount of the constituent unit containing a carboxy group was excessively large, both good wet adhesion and good dry adhesion was not able to be achieved (Comparative Example B5).

The present application claims priority from the Japanese Patent Application No. 2020-144555 filed on August 28, 2020. The contents described in the specification of this application are all incorporated in the specification of the present application.

## Industrial Applicability

The resin composition of the present invention is excellent in dry adhesion to both the positive electrode and the negative electrode. Therefore, it is very useful in production of an electrode for a secondary battery and the like.

## Claims

1. A resin composition comprising a vinylidene fluoride copolymer comprising:

   73.7 mass% or more and 96.9 mass% or less of a constituent unit derived from vinylidene fluoride,
   0.1 mass% or more and 1.3 mass% or less of a constituent unit containing a carboxy group, and
   3 mass% or more and 25 mass% or less of an other constituent unit, the other constituent unit not containing a carboxy group and being derived from a compound copolymerizable with the vinylidene fluoride, with the proviso that a total amount of constituent units constituting the vinylidene fluoride is taken as 100 mass%, wherein a solution obtained by dissolving 4 g of the vinylidene fluoride copolymer in 1 L of N,N-dimethylformamide has an intrinsic viscosity at 30°C of 0.5 dL/g or more and 3 dL/g or less.

2. The resin composition according to claim 1,

   wherein the constituent unit containing a carboxy group is a constituent unit derived from a compound represented by General Formula (1):

   [Chem, 1]

   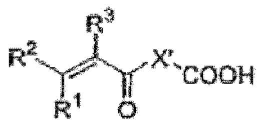

   ・・・(1)

   where in General Formula (1), $R^1$, $R^2$, and $R^3$ each independently represent a hydrogen atom, a chlorine atom, or an alkyl group having 1 to 5 carbon atoms, and X' represents an atomic group having a number of main chain atoms of 1 to 19 and a molecular weight of 472 or less.

3. The resin composition according to claim 1 or 2,
   wherein the other constituent unit is a constituent unit derived from chlorotrifluoroethylene or hexafluoropropylene.

4. A coating composition comprising:

   the resin composition described in any one of claims 1 to 3; and
   a solvent.

5. The coating composition according to claim 4,
   wherein an inorganic filler having a median diameter of 10 $\mu$m or less as measured by a laser diffraction scattering method is contained in an amount of 30 mass% or more and 99 mass% or less of a solid content.

6. An electrode for stacking, comprising:

   an electrode; and
   a resin-containing layer disposed on at least one side of the electrode, the resin-containing layer containing the resin composition described in any one of claims 1 to 3.

7. A separator for stacking, comprising:

   a separator; and
   a resin-containing layer disposed on at least one side of the separator, the resin-containing layer containing the resin composition described in any one of claims 1 to 3.

8. A nonaqueous-electrolyte secondary battery, comprising:

   a positive electrode;
   a separator;

a negative electrode; and
a resin-containing layer which contains the resin composition described in any one of claims 1 to 3 between the positive electrode and the separator and/or between the negative electrode and the separator.

**9.** A method for producing a nonaqueous-electrolyte secondary battery, the method comprising:

on at least one side of at least one member selected from the group consisting of a positive electrode, a separator, and a negative electrode, applying the coating composition described in claim 4 or 5 and forming a resin-containing layer by solidifying the coating composition; forming a laminate by stacking the positive electrode, the separator, and the negative electrode with the resin-containing layer located between the positive electrode and the separator, and/or between the negative electrode and the separator; and
hot-pressing the laminate.

## INTERNATIONAL SEARCH REPORT

International application No.
PCT/JP2021/026412

A. CLASSIFICATION OF SUBJECT MATTER
Int. Cl. C08F214/22(2006.01)i, C08L27/16(2006.01)i, C09D127/16(2006.01)i, H01M4/13(2010.01)i, C08K3/013(2018.01)i, H01M50/426(2021.01)i
FI: C08L27/16, C08K3/013, C08F214/22, C09D127/16, H01M50/426, H01M4/13

According to International Patent Classification (IPC) or to both national classification and IPC

B. FIELDS SEARCHED

Minimum documentation searched (classification system followed by classification symbols)
Int. Cl. C08L27/00-27/24, C08K3/00-13/08, C09D, B32B27/00-27/42, B32B15/00-15/20, H01M50/40-50/497, H01M4/00-4/62, C08F214/00-214/28

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2019/107521 A1 (TEIJIN LTD.) 06 June 2019 (2019-06-06), claims, paragraphs [0010], [0050]-[0056], examples | 1-9 |
| X | WO 2019/054310 A1 (TEIJIN LTD.) 21 March 2019 (2019-03-21), claims, paragraphs [0048], [0052], examples | 1-9 |
| X<br>A | JP 2014-520378 A (SOLVAY SPECIALTY POLYMERS ITALY S. P. A.) 21 May 2014 (2014-05-21), claims, paragraph [0064], example 2 | 1, 3-9<br>2 |
| X | JP 2018-172596 A (KUREHA CORP.) 08 November 2018 (2018-11-08), claims, paragraphs [0097], [0098], examples, (table 1) | 1-9 |

☒ Further documents are listed in the continuation of Box C.    ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08.09.2021 | 21.09.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No.
PCT/JP2021/026412

C (Continuation). DOCUMENTS CONSIDERED TO BE RELEVANT

| Category* | Citation of document, with indication, where appropriate, of the relevant passages | Relevant to claim No. |
|---|---|---|
| X | JP 2017-117788 A (SAMSUNG SDI CO., LTD.) 29 June 2017 (2017-06-29), claims, examples | 1-9 |
| A | WO 2017/026485 A1 (TORAY BATTERY SEPARATOR FILM CO., LTD.) 16 February 2017 (2017-02-16), claims | 1-9 |
| A | JP 9-289023 A (KUREHA CHEMICAL INDUSTRY CO., LTD.) 04 November 1997 (1997-11-04), claims | 1-9 |

Form PCT/ISA/210 (continuation of second sheet) (January 2015)

**INTERNATIONAL SEARCH REPORT**
Information on patent family members

International application No.
PCT/JP2021/026412

| Patent Documents referred to in the Report | Publication Date | Patent Family | Publication Date |
|---|---|---|---|
| WO 2019/107521 A1 | 06.06.2019 | CN 111357133 A<br>KR 10-2020-0093546 A | |
| WO 2019/054310 A1 | 21.03.2019 | EP 3683860 A1<br>claims, paragraphs [0063]-[0066], [0072], examples<br>CN 111052449 A<br>KR 10-2020-0053489 A | |
| JP 2014-520378 A | 21.08.2014 | US 2014/0120269 A1<br>claims, paragraph [0084], example 2<br>WO 2012/175418 A1<br>CN 103620819 A<br>KR 10-2014-0051259 A | |
| JP 2018-172596 A | 08.11.2018 | KR 10-2019-0090016 A<br>US 2021/0179756 A1<br>claims, paragraphs [0087], [0088], examples, (table 1)<br>CN 110167976 A | |
| JP 2017-117788 A | 29.06.2017 | US 2017/0187024 A1<br>claims, examples<br>KR 10-2017-0075490 A<br>CN 10691081 A | |
| WO 2017/026485 A1 | 16.02.2017 | CN 107925036 A<br>KR 10-2018-0034393 A | |
| JP 9-289023 A | 04.11.1997 | US 5776637 A<br>claims<br>KR 10-1998-0032038 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017117788 A
- WO 2014002937 A
- JP 2015172101 A
- JP 2020144555 A